# FASCICULE DE BREVET EUROPEEN

(11) **EP 1 546 602 B1**
(45) Date de publication et mention de la délivrance du brevet: **01.03.2006**
(21) Numéro de dépôt: 03773772.3
(22) Date de dépôt: 11.09.2003
(51) Int. Cl.: F17D 5/06, G01M 5/00, G01M 3/28

(54) **PROCEDE ET DISPOSITIF DE SURVEILLANCE D'UNE CONDUITE FLEXIBLE**
VERFAHREN UND VORRICHTUNG ZUR ÜBERWACHUNG EINER FLEXIBLEN ROHRLEITUNG
METHOD AND DEVICE FOR MONITORING A FLEXIBLE PIPE

(30) Priorité: 18.09.2002 FR 0211556
(43) Date de publication de la demande: 29.06.2005
(73) Titulaire: Technip France, 92400 Courbevoie (FR)
(72) Inventeur: DE AQUINO, Roberto Jourdan, CEP-20530-560 Rio de Janeiro (BR)
(74) Mandataire: Bertrand, Didier
(86) Numéro de dépôt international: PCT/FR2003/002694
(87) Numéro de publication internationale: WO 2004/027310

(56) Documents cités:
- GB-A- 2 148 447
- US-A- 3 972 223
- US-A- 4 775 855
- PATENT ABSTRACTS OF JAPAN vol. 2000, no. 03, 30 mars 2000 (2000-03-30) & JP 11 344390 A (MITSUBISHI HEAVY IND LTD), 14 décembre 1999 (1999-12-14)
- FOX-TEK: "What's new archive" INTERNET ARTICLE, janvier 2002 (2002-01), XP002240562 OTTAWA

## Description

La présente invention concerne un procédé de surveillance d'une conduite flexible pour véhiculer sur de grandes distances un fluide sous pression et le cas échéant sous haute température, tel qu'un gaz, du pétrole, de l'eau ou d'autres fluides. L'invention vise plus précisément à surveiller et à prévenir les problèmes liés à une rupture des fils d'armure de la conduite flexible au voisinage ou à l'intérieur de l'embout terminal, où ils sont ancrés, notamment dans un embout terminal pour une conduite montante ("riser") flexible destinée à une exploitation pétrolière en mer. La présente invention concerne également un dispositif associé au procédé de surveillance.

Les conduites flexibles utilisées en mer présentent des configurations variées en fonction de leur utilisation précise mais répondent en général aux critères constructifs définis notamment dans les recommandations API 17 B et API 17 J établies par l'American Petroleum Institute sous l'intitulé "Recommended Practice for Flexible Pipe" and "Specification for Unbonded Flexible Pipe". Elles comprennent de l'intérieur vers l'extérieur :
- une gaine d'étanchéité interne ou gaine de pression, réalisée en matière plastique généralement polymère, résistant à l'action chimique du fluide à transporter ;
- éventuellement une voûte de pression résistant principalement à la pression développée par le fluide dans la gaine d'étanchéité et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de forme ont une section en Z ou en T ou leurs dérivés (teta ou zeta), en U, ou en I ; ladite voûte de pression peut également comporter une frette ;
- au moins une nappe (et généralement au moins deux nappes croisées) d'armures de traction enroulées à pas long ; l'angle d'armage mesuré sur l'axe longitudinal de la conduite est inférieur à 60°; et
- une gaine de protection et d'étanchéité externe en polymère.

Une telle conduite peut être à passage interne lisse quand le passage est directement formé par la gaine d'étanchéité (elle est alors dite "smooth bore") ou à passage non-lisse ("rough bore") quand on prévoit en outre à l'intérieur de la gaine d'étanchéité interne une carcasse constituée par exemple d'un feuillard agrafé qui sert à empêcher l'écrasement de la conduite sous la pression externe.

Les embouts des conduites, destinés à leurs connexions entre elles ou avec des équipements terminaux, sont également définis dans les recommandations API 17J, et doivent être réalisés dans des conditions assurant à la fois une bonne solidarisation et une bonne étanchéité. Celles-ci sont généralement obtenues par un sertissage de la gaine, c'est-à-dire par une pénétration radiale partielle d'un élément rigide dans la gaine.

On connaît plusieurs types d'embouts pour les conduites flexibles utilisant le principe du sertissage de la gaine interne, notamment par les documents FR 2 214 852 ou WO 99/19655 ou encore par le document WO97/25564 au nom de la Demanderesse et le document PCT/FR01/03305 également au nom de la Demanderesse. Ce dernier document décrit notamment un embout de fixation pour une conduite tubulaire flexible comprenant une première partie annulaire (généralement appelée voûte de l'embout) sur laquelle peut prendre appui une première bride de sertissage munie d'un cône de sertissage de la gaine intérieure et une seconde partie annulaire (généralement appelée capot) entourant et prolongeant vers l'arrière la première partie annulaire et sur laquelle peut prendre appui une seconde bride de sertissage munie d'un cône de sertissage de la gaine externe coopérant avec une canule arrière d'appui de sertissage, la seconde partie annulaire définissant avec la première partie annulaire un espace annulaire dans lequel sont disposées les armures de traction de manière à ce qu'elles soient décollées radialement de la gaine interne afin de passer autour de la première bride de sertissage et de la première partie annulaire pour y être fixées ; l'embout comporte un collier de blocage des armures entre la première bride de sertissage et la seconde bride de sertissage ; l'espace annulaire précité est destiné à être rempli d'une matière de remplissage telle qu'une résine qui vient bloquer les divers éléments compris dans cet espace.

Il est connu de surveiller dans le temps la bonne tenue d'une conduite et d'un embout de conduite par divers procédés et dispositifs dans le but de détecter certaines anomalies.

On connaît ainsi des procédés d'inspection de l'intérieur d'une conduite, à l'aide de "souris" d'inspection parcourant la conduite et donnant par exemple des images vidéo ou bien repérant un éventuel recul de la carcasse au niveau d'un embout par un système de courants de Foucault et de capteurs associés (cf. le document FR 2790087 au nom de la Demanderesse). De tels procédés, outre qu'ils renseignent sur la carcasse mais non directement sur la gaine (dans le cas des conduites "rough bore"), ont l'inconvénient d'exiger l'arrêt provisoire de l'exploitation pour envoyer la souris dans la conduite.

On connaît aussi des procédés pour la détection de fuites sur les canalisations (FR 2 626 974, US 4 775 855) ou des procédés de détection de la rupture imminente de conduite par des éléments capteurs disposés sur la conduite (GB 2 057 696).

On a aussi développé des procédés plus spécifiquement liés à la surveillance des embouts parce qu'on s'est aperçu qu'ils sont le siège de certaines altérations dans le temps. Il est utile de pouvoir détecter à temps ces altérations pour pouvoir intervenir de façon programmée sur la conduite et l'embout et procéder aux réparations ou changements nécessaires.

En particulier, il est connu et il importe de surveiller la position de la gaine de pression par une inspection régulière.

Pour pouvoir effectivement accéder à une information de déplacement concernant la gaine, il a été proposé dans le document WO 98/12545 de pourvoir l'élément à contrôler de marqueurs dont le déplacement peut être détecté par rayons X, à l'aide d'un détecteur de rayons X ou d'une pellicule photographique sensible aux rayons X. Dans tous les cas, cela nécessite un équipement lourd et également l'arrêt de la production pour pouvoir disposer le détecteur en place autour de la conduite.

La Demanderesse a aussi proposé dans la demande française n° 02 02 155 un procédé de détection et un embout associé qui puissent fournir une indication sur le déplacement de la gaine de pression ou d'autres couches de la conduite sans nécessiter l'arrêt de la production. L'embout est adapté à la détection du fait qu'on équipe directement l'embout d'un capteur de détection du déplacement d'une couche donnée de la conduite, notamment de la gaine de pression.

Le document US 3 972 223 concerne un procédé et un dispositif de surveillance de la tenue d'une conduite sur sa longueur ou sur la longueur de chacun de ses tronçons. Le document prévoit de disposer dans l'épaisseur de la paroi multicouche de la conduite des vessies allongées remplies d'un fluide sous pression, et communiquant par des tubes avec un ou plusieurs manomètres. Des impacts sur la longueur de la conduite, ou une destruction des couches de la paroi de la conduite entraîne une variation de pression du fluide contenu dans les vessies et sont repérés par le ou les manomètres. Cependant ce document ne montre nullement que ce procédé puisse être utilisé pour la surveillance des embouts eux-mêmes.

Le document GB 2 148 447 montre un embout de connexion. Un espace annulaire compris entre deux couches d'armure voit sa pression mesurée à l'aide d'un manomètre auquel l'espace annulaire est relié par un passage. Ce manomètre peux détecter des anomalies du débit de fuite qui peuvent signaler un endommagement des armures, cet endommagement n'étant pas nécessairement localisé au niveau de l'embout. Ce document n'enseigne donc pas non plus une surveillance au niveau de l'embout terminal.

Tous ces procédés de surveillance concourent à une meilleure prévention des incidents d'exploitation de conduite. Toutefois, certaines causes d'altération de la conduite flexible au niveau de l'embout ne peuvent être détectées par les procédés existants. C'est notamment le cas des ruptures de certains des fils formant les nappes d'armure de traction. Ces ruptures de fils, progressives dans le temps, peuvent amener à une destruction de l'embout et donc de la conduite lorsque le nombre de fils endommagés augmente. Ainsi, la présente invention vise à améliorer la surveillance des embouts terminaux de conduite flexible afin de prévenir les arrêts brutaux de production. Elle consiste essentiellement à surveiller et à prévenir des incidents potentiels liés à la tenue des fils des nappes d'armure de traction à l'intérieur de l'embout.

L'invention atteint son but grâce à un procédé de surveillance de la tenue d'une conduite flexible de transport de fluide sous pression au niveau d'un embout terminal, ladite conduite comportant notamment une gaine intérieure de pression, des nappes de fils d'armures de traction et une gaine extérieure solidarisées à l'embout, caractérisé en ce qu'il consiste à surveiller la tenue des armures de traction dans l'embout en surveillant l'évolution de la torsion de la conduite flexible en tant que phénomène lié à la désorganisation des nappes d'armures consécutive à une rupture de plusieurs fils d'armure de traction à l'intérieur de l'embout. A la connaissance de la Demanderesse, on n'avait jamais jusque-là proposé de surveiller la tenue des armures dans l'embout de conduite, ni jamais examiné les phénomènes annonciateurs de la déchéance desdites nappes d'armures de traction, notamment la torsion de la conduite.

Ainsi selon l'invention, pour surveiller la tenue des armures, on surveille la torsion de la conduite flexible au voisinage de l'embout, par exemple au moyen de jauges de déformation, notamment une ou plusieurs jauges extensométriques. Ces jauges peuvent notamment être disposées sur ou au contact de la gaine externe de la conduite, au voisinage de l'embout terminal. En effet, la casse des fils d'armure au niveau de l'embout entraîne un déséquilibre des forces et des tensions dans les nappes superposées qui se traduit par une torsion de la conduite. Celle-ci a ainsi tendance à prendre une forme dite en "tire-bouchon" ou en "queue de cochon" au voisinage de l'embout où s'est produite la casse des fils d'armure et c'est cette torsion ou du moins son apparition progressive qu'on peut surveiller selon ce premier mode de réalisation.

Il est avantageux de cumuler cette détection de torsion avec la surveillance d'un ou plusieurs paramètres liés à l'échappement de gaz au niveau de l'embout, et plus précisément au niveau d'une des valves de décharge prévues dans l'embout et plus couramment appelées soupapes de drainage gaz. En effet, lorsque la conduite flexible transporte un fluide contenant des gaz (fluide polyphasique), certains gaz diffusent dans l'annulaire existant entre la gaine de pression et la gaine extérieure. Ces gaz sont drainés dans l'annulaire jusqu'aux embouts où ils sont évacués par ces soupapes (généralement au nombre de trois dans les embouts). La rupture des fils d'armure dans l'embout entraîne une élongation de la conduite qui sollicite la gaine d'étanchéité au point de provoquer la rupture de la barrière d'étanchéité du passage interne de la conduite et donc l'augmentation du passage gazeux dans l'annulaire. Cette réalisation additionnelle est donc utilisable sur des conduites montantes de production d'hydrocarbure ou d'injection de gaz ("gas lift risers"), mais pas sur des conduites montantes d'injection d'eau. La surveillance de l'échappement gazeux peut se faire en mesurant un ou plusieurs paramètres liés à l'échappement gazeux tels que la fréquence de décharge et/ou le temps de décharge et/ou le débit de la soupape par exemple.

Il est possible et même recommandé de cumuler les deux systèmes de surveillance pour renforcer la sécurité de la détection.

A l'apparition d'une anomalie dans la surveillance effectuée, on peut conclure à l'altération de la tenue des nappes d'armures de traction due à la rupture de plusieurs fils qui les constituent et ainsi prévenir le risque de casse prochain de la conduite au niveau de l'embout de manière à prendre les mesures de protection et de sauvegarde qui s'imposent.

L'invention concerne aussi le dispositif associé au procédé de l'invention. Ce dispositif de surveillance de la tenue d'une conduite flexible de transport de fluide sous pression au niveau d'un embout terminal, ladite conduite comportant notamment une gaine intérieure de pression, des nappes de fils d'armures de traction et une gaine extérieure solidarisées à l'embout, est caractérisé en ce qu'il comprend des moyens de surveillance de l'évolution d'un phénomène lié à la désorganisation des nappes d'armures consécutive à une rupture de plusieurs fils d'armure de traction à l'intérieur de l'embout. Ces moyens de surveillance sont des moyens de détection d'une augmentation de la torsion de la conduite au voisinage de l'embout.

Les moyens de surveillance comprennent avantageusement une unité informatique chargée de récupérer et d'analyser le signal envoyé par les moyens de détection de torsion de la conduite. La même unité informatique peut servir pour surveiller plusieurs conduites montantes équipées desdits moyens de surveillance et pour déclencher une alarme lorsque des moyens de détection ont détecté une anomalie dans l'une des conduites surveillées.

D'autres avantages et caractéristiques seront mis en évidence à la lecture de la description qui suit, en référence à la figure annexée qui représente schématiquement un embout terminal de conduite, avec arrachement partiel, équipé de moyens de détection conformément à l'invention.

La figure montre très schématiquement un embout 1, symétrique autour de son axe longitudinal XX' coïncidant avec l'axe central de la conduite 2. L'embout, partiellement recouvert par un manchon raidisseur 12 (couramment appelé "stiffener"), comporte une bride de connexion 3 permettant la fixation à une plate-forme 4. La conduite 2 comporte de manière connue une carcasse 5 et sa gaine de pression 6, des armures de traction 7 et une gaine extérieure 8. Ces différents éléments constitutifs sont fixés et sertis à l'intérieur de l'embout 1 par divers moyens connus en soi, notamment par le document WO 02/39003 ou le document US 6 039 083. Par exemple, les armures peuvent être maintenues par des colliers 7' et noyées dans une résine. Par ailleurs les gaz apparaissant dans l'annulaire de la conduite 2 sont rassemblés dans une ligne 9 communiquant avec l'extérieur par une vanne étagée 10 ou soupape de drainage gaz (On a représenté une seule des trois soupapes habituellement présentes). Une soupape différentielle à étages est connue par exemple par le document FR 2 777 966 ou le document US 2 420 370. Ces éléments qui sont connus en eux-mêmes ne nécessitent pas de description plus détaillée. Du reste, l'invention ne dépend pas de la configuration précise de l'embout et de la conduite, mais elle peut être mise en oeuvre sur d'autres types d'embout et de conduite que celui illustré ici. La description de l'embout n'est donnée qu'à titre indicatif d'un mode de réalisation possible sur lequel peut être mise en oeuvre l'invention, de même que la conduite flexible peut présenter une structure interne différente tant au niveau du nombre de couches la constituant que dans leur nature.

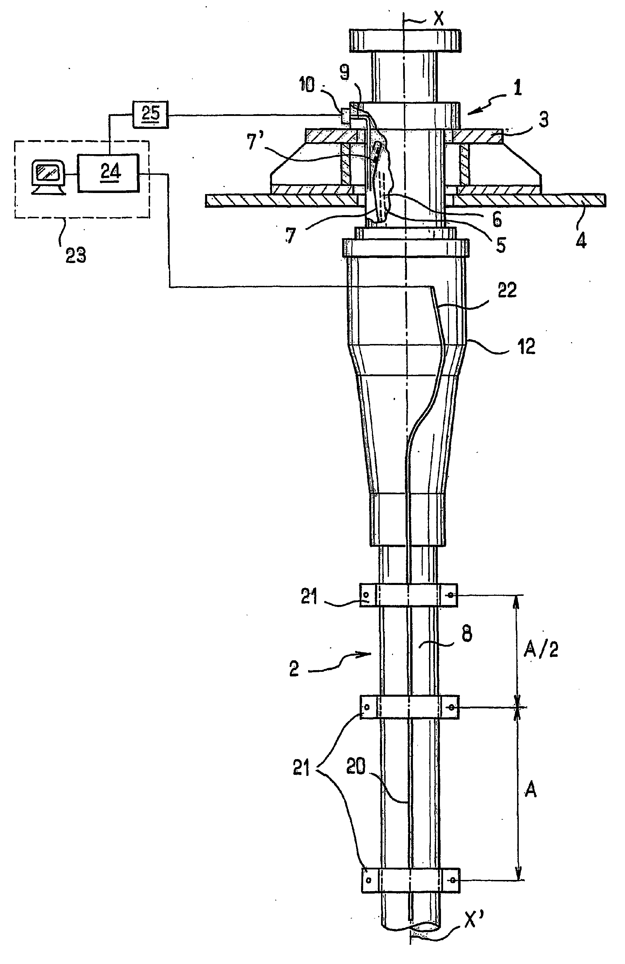

Selon le procédé conforme à l'invention de surveillance de la tenue des fils d'armure 7 ou de leur ancrage à l'intérieur de l'embout, on surveille la torsion susceptible d'être engendrée dans la conduite en raison de la désorganisation des nappes d'armure, ladite torsion de la conduite pouvant être détectée au niveau de la gaine 8 de la conduite 2, au voisinage de l'embout 1. Pour cela, on équipe la conduite flexible 2 de jauges ou extensomètres linéaires destinés à détecter la torsion de la conduite. Ces jauges peuvent par exemple prendre la forme d'un barreau 20 (couramment appelé "Smart Rod"®) qui est équipé de fibres optiques à réseau de Bragg. La conduite 2 peut ainsi être équipée d'un ou plusieurs barreaux 20 comportant chacun plusieurs jauges de déformation et destinés à fournir à un dispositif d'analyse 23 auquel ils sont reliés, des informations sur la forme que prend la conduite flexible 2 au voisinage de l'embout. La mise en place du ou des barreaux et leur nature dépendent essentiellement des conditions d'utilisation de la conduite et de la sensibilité voulue pour la détection. Selon l'exemple illustré figure 1, le dispositif de surveillance comprend un barreau 20 monté coulissant dans des colliers 21, lesdits colliers étant au nombre de trois et espacés respectivement d'un pas A (pas de la nappe d'armure externe) et d'un demi-pas A/2. Ce barreau 20 qui est équipé d'extensomètres (à réseau de Bragg) permet de donner des informations sur sa flexion existant dans chacun des intervalles entre les colliers 21, informations desquelles il est possible de déduire l'existence ou non d'une torsion de la conduite 2. Le nombre de barreaux nécessaire à la surveillance d'une conduite et leur installation le long de la gaine 8 au voisinage de l'embout 1 dépend essentiellement de la finesse des informations nécessaires à la surveillance. Ce ou ces barreaux 20 sont reliés par une connexion 22 au dispositif d'analyse 23 qui par comparaison avec un seuil donné, permet de détecter une torsion anormale de la conduite 2 et génère une alarme qui permet à l'utilisateur d'anticiper la casse de la conduite flexible au niveau de son embout terminal et donc de prévoir un arrêt de production et des opérations de maintenance adaptées. Cette torsion détectée grâce aux capteurs d'extensométrie du ou des barreaux 20 traduit un phénomène de déchéance de la tenue des fils des nappes d'armure 7.

Le principe des jauges linéaires est bien connu, notamment sous forme de fibres optiques à réseau de Bragg. On pourra se reporter aux documents FR 2 791 768 ou WO 99/32862.

L'unité informatique 24 qui constitue le coeur du dispositif d'analyse 23 relié aux jauges linéaires situées sur le barreau 20 est programmée pour faire la distinction entre des déformations ponctuelles ou transitoires de la conduite, liées à ses conditions d'exploitation (houle, courant, ...) et les déformations permanentes qui sont symptomatiques d'une torsion de la conduite 2 liée à la déchéance des nappes d'armure de traction 7 à l'intérieur de l'embout terminal 1.

La figure représente un barreau 20 muni de jauges linéaires qui est placée à l'extérieur de la conduite et même partiellement au-dessus du manchon raidisseur, ce qui est plus commode pour placer le dispositif de surveillance sur une installation existante. Si le dispositif de surveillance est prévu dès l'origine, il est possible de l'intégrer entre le manchon raidisseur et la gaine externe de la conduite. Il est également possible d'intégrer les moyens de détection (jauges linéaires, ...) à l'intérieur même de la conduite, comme au sein des nappes d'armures ou ailleurs dans la conduite au voisinage de l'embout.

Naturellement, d'autres moyens de détection de torsion que les jauges extensométriques sont possibles.

On peut notamment combiner la détection de torsion qui vient d'être appliquée à une détection d'une variation dans les paramètres liés à l'échappement du gaz drainé dans l'annulaire de la conduite 2. Cet échappement s'effectue au niveau d'une des soupapes de drainage gaz 10 qui sont situées dans l'embout terminal 1. Cette surveillance s'effectue à l'aide d'un dispositif comportant des moyens de détection 25 (par exemple des pressostats) reliés à un dispositif d'analyse 23 susceptible de générer une alarme lorsqu'une variation de la fréquence, du débit ou du temps de décharge voire de la pression régnant dans l'annulaire est symptomatique d'un problème de déchéance des nappes d'armure de traction. En effet, cette déchéance implique une rupture progressive de l'étanchéité de la gaine interne au niveau de son sertissage dans l'embout, augmentant le flux gazeux de l'intérieur de la gaine interne vers l'annulaire et donc une modification sensible des paramètres liés à l'échappement du gaz. Les moyens de détection 25 peuvent être constitués par des capteurs de pression ou de débit susceptibles de fournir en temps réel au dispositif d'analyse (unité informatique) des informations liées à cet échappement des gaz drainés. Ces capteurs 25 peuvent également mesurer tous types de paramètres liés à cet échappement qui permettent de déduire une augmentation significative du volume de gaz drainé vers l'extérieur au travers de la soupape de drainage gaz 10. Ainsi, ils peuvent mesurer directement le volume de gaz drainé ou mesurer la fréquence de décharge de la soupape voire le temps d'ouverture de ladite soupape par exemple. Par exemple, les capteurs 25 mesurent la fréquence de décharge et l'unité informatique 24 effectue un comparatif sur les cinq dernières décharges pour en déduire des informations sur une possible augmentation de la fréquence liée à une déchéance des nappes d'armure de traction.

Ce procédé de surveillance de la tenue d'une conduite flexible au niveau de son embout terminal et notamment d'une conduite de type "conduite montante" (conduite reliant un équipement sous-marin à une installation de surface), ainsi que les dispositifs de détection associés, trouvent avantageusement leur application dans les systèmes d'exploitation pétrolière offshore existants sans lesquels une pluralité de conduites montantes est utilisée. En effet, chaque conduite montante peut être équipée de moyens de détection du type précédemment décrit, moyens destinés à surveiller la torsion de la conduite flexible et éventuellement la décharge des gaz au niveau d'une soupape de décharge de l'embout. L'ensemble desdits moyens de détection est alors relié à un dispositif d'analyse commun qui permet l'analyse des signaux reçus pour générer si besoin une alarme en cas de déchéance constatée d'une ou plusieurs nappes d'armure de traction à l'intérieur d'un embout terminal d'une des conduites montantes.

## Revendications

1. Procédé de surveillance de la tenue d'une conduite flexible (2) de transport de fluide sous pression au niveau d'un embout terminal (1), ladite conduite (2) comportant une gaine intérieure de pression (6), des nappes de fils d'armures de traction (7) et une gaine extérieure (8) solidarisées à l'embout (1), **caractérisé en ce qu'**il consiste à surveiller la tenue des armures de traction (7) dans l'embout (1) en surveillant l'évolution de la torsion de la conduite flexible (2) au voisinage de l'embout (1) en tant que phénomène lié à la désorganisation des nappes d'armures consécutive à une rupture de plusieurs fils d'armure de traction à l'intérieur de l'embout.

2. Procédé selon la revendication 1, **caractérisé en ce qu'**on surveille la torsion de la conduite flexible (2) au moyen d'au moins une jauge de déformation (20) disposée sur la gaine externe (8) de la conduite.

3. Procédé selon l'une quelconque des revendications 1 ou 2, pour la surveillance d'une conduite flexible (2) dont l'embout (1) comporte également une soupape de drainage gaz (10), **caractérisé en ce que** le procédé consiste à surveiller la quantité d'échappement de gaz au niveau de la soupape (10).

4. Procédé selon la revendication 3, **caractérisé en ce que** cette surveillance s'effectuer en mesurant la variation de la fréquence de décharge et/ou du temps de décharge.

5. Dispositif de surveillance de la tenue d'une conduite flexible (2) de transport de fluide sous pression au niveau d'un embout terminal (1), ladite conduite comportant une gaine intérieure de pression (6), des nappes de fils d'armures de traction (7) et une gaine extérieure (8) solidarisées à l'embout, **caractérisé en ce qu'**il comprend des moyens de surveillance de l'évolution d'un phénomène lié à la désorganisation des nappes d'armures (7) consécutive à une rupture de plusieurs fils d'armure de traction à l'intérieur de l'embout (1), ces moyens de surveillance (20, 25) étant des moyens de détection d'une augmentation de la torsion de la conduite au voisinage de l'embout.

6. Dispositif selon la revendication 5, **caractérisé en ce que** lesdits moyens de détection d'une augmentation de la torsion de la conduite comportent des jauges de déformation (20).

7. Dispositif selon la revendication 6, **caractérisé en ce que** les jauges de déformation (20) sont sous forme de fibres optiques à réseau de Bragg.

8. Dispositif selon l'une quelconque des revendications 5 à 7, **caractérisé en ce que** lesdits moyens de surveillance (20, 25) comprennent une unité informatique (24) pouvant engendrer une alarme en fonction des anomalies détectées.

## Patentansprüche

1. Verfahren zur Überwachung des Verhaltens einer flexiblen Leitung bzw. Rohrleitung (2) für einen Transport von Fluid unter Druck auf dem Niveau eines Endanschlusses (1) bzw. Endstutzens, wobei die Leitung (2) ein inneres Druckrohr bzw. ein innerer Druckmantel (6), Schichten (7) aus Zug- bzw. Traktionsarmierungsfasern und ein äußeres Rohr bzw. ein äußerer Druckmantel (8) umfaßt, die mit dem Anschluß (1) verbunden sind, **dadurch gekennzeichnet, daß** es aus einem Überwachen des Verhaltens der Zug- bzw. Traktionsarmierungen (7) an bzw. in dem Anschluß (1) besteht, indem die Entwicklung der Torsion der flexiblen Leitung (2) in der Nachbarschaft bzw. Nähe des Anschlusses (1) als das Phänomen überwacht wird, das mit der Auflösung von Armierungsummantelungen bzw. - schichten in Folge eines Bruchs von mehreren Zug- bzw. Traktionsarmierungsfasern im Inneren des Anschlusses auftritt.

2. Verfahren nach Anspruch 1, **dadurch gekennzeichnet, daß** die Torsion der flexiblen Leitung (2) mittels wenigstens einem Deformationsmeßgerät (20) bzw. wenigstens einer Deformatonslehre (20) überwacht wird, das auf dem externen bzw. äußeren Rohr (8) der Leitung angeordnet wird.

3. Verfahren nach Anspruch 1 oder 2, für das Überwachen einer flexiblen Leitung (2), deren Anschluß (1) auch ein Gasdrainageventil (10) umfaßt, **dadurch gekennzeichnet, daß** das Verfahren in dem Überwachen der Austrittsmenge an Gas auf Höhe des Ventils (10) besteht.

4. Verfahren nach Anspruch 3, **dadurch gekennzeichnet, daß** diese Überwachung durch ein Messen der Änderung der Häufigkeit bzw. Frequenz der Entladung und/oder der Entladungszeit ausgeführt wird.

5. Vorrichtung zur Überwachung des Verhaltens einer flexiblen Leitung (2) für einen Transport von Fluid unter Druck auf dem Niveau eines Endanschlusses bzw. Endstutzens (1), wobei die Leitung ein inneres Druckrohr (6), Schichten (7) aus Zugarmierungsfasern und ein äußeres Rohr bzw. einen äußeren Druckmantel (8) umfaßt, die mit dem Anschluß verbunden sind, **dadurch gekennzeichnet, daß** sie Überwachungseinrichtungen bzw. -mittel der Entwicklung eines Phänomens umfaßt, welches mit der Auflösung von Armierungsummantelungen bzw. -schichten (7) in der Folge eines Bruchs von mehreren Zug- bzw. Traktionsarmierungsfasern im Inneren des Anschlusses (1) verbunden ist, wobei die Überwachungsmittel (20, 25) Mittel zur Detektion eines Anstiegs bzw. einer Vergrößerung der Torsion der Leitung in der Nachbarschaft bzw. Nähe des Anschlusses sind.

6. Vorrichtung nach Anspruch 5, **dadurch gekennzeichnet, daß** die Mittel zur Detektion eines Anstiegs der Torsion der Leitung Deformationslehren bzw. -meßgeräte (20) umfassen.

7. Vorrichtung nach Anspruch 6, **dadurch gekennzeichnet, daß** die Deformationsmeßgeräte (20) in Form von optischen Fasern in einem Bragg'schen Netzwerk bzw. Gitter vorliegen.

8. Vorrichtung nach einem der Ansprüche 5 bis 7, **dadurch gekennzeichnet, daß** die Überwachungsmittel (20, 25) eine Informatik-Einheit (24) umfassen, welche einen Alarm als Funktion von detektierten Anomalien ausgeben bzw. erzeugen kann.

## Claims

1. A method of monitoring the integrity of a flexible pipe (2) for transporting a pressurized fluid in a terminal end-fitting (1), said pipe (2) comprising an internal pressure sheath (6), plies of tensile armor wires (7) and an outer sheath (8) fastened to the end-fitting (1), which method consists in monitoring the integrity of the tensile armor plies (7) in the end-fitting (1) by monitoring the change in the twist in the flexible pipe (2) near the end-fitting (1) as phenomenon associated with the disorganization of the armor plies as a result of a fracture of several tensile armor wires inside the end-fitting.

2. The method as claimed in claim 1, wherein the twist in the flexible pipe (2) is monitored by means of at least one strain gauge (20) placed on the external sheath (8) of the pipe.

3. The method as claimed in either of claims 1 and 2 for monitoring a flexible pipe (2), the end-fitting (1) of which also includes a gas drainage valve (10), which method consists in monitoring the quantity of gas escaping from the valve (10).

4. The method as claimed in claim 3, wherein this monitoring is performed by measuring the variation in the discharge frequency and/or in the discharge time.

5. A device for monitoring the integrity of a flexible pipe (2) for transporting a pressurized fluid at a terminal end-fitting (1), said pipe comprising an internal pressure sheath (6), plies of tensile armor wires (7) and an outer sheath (8) that are fastened to the end-fitting, which device comprises means for monitoring the change in a phenomenon associated with the disorganization of the armor plies (7) as a result of a fracture of several tensile armor wires inside the end-fitting (1), these monitoring means (20, 25) being means for detecting an increase in the twist in the pipe near the end-fitting.

6. The device as claimed in claim 5, wherein said means for detecting an increase in the twist in the pipe comprise strain gauges (20).

7. The device as claimed in claim 6, wherein the strain gauges (20) are in the form of Bragg grating optical fibers.

8. The device as claimed in any one of claims 5 to 7, wherein said monitoring means (20, 25) include a computing unit (24) that can generate an alarm depending on the anomalies detected.
